(19) Europäisches Patentamt
European Patent Office
Office européen des brevets

(11)  **EP 3 572 225 B1**

(12)  **EUROPEAN PATENT SPECIFICATION**

(45) Date of publication and mention
of the grant of the patent:
**12.07.2023  Bulletin 2023/28**

(21) Application number: **18741382.8**

(22) Date of filing: **18.01.2018**

(51) International Patent Classification (IPC):
**B32B 5/28** *(2006.01)*     **C08J 5/04** *(2006.01)*
**B32B 1/08** *(2006.01)*     **B32B 5/02** *(2006.01)*
**B32B 5/12** *(2006.01)*     **B32B 5/26** *(2006.01)*

(52) Cooperative Patent Classification (CPC):
**B32B 5/26; B32B 1/08; B32B 5/02; B32B 5/12;**
**B32B 5/28; C08J 5/04;** B32B 2250/05;
B32B 2250/20; B32B 2250/40; B32B 2260/023;
B32B 2260/046; B32B 2262/10; B32B 2262/101;
B32B 2262/103; B32B 2262/106;          (Cont.)

(86) International application number:
**PCT/JP2018/001333**

(87) International publication number:
**WO 2018/135562 (26.07.2018 Gazette 2018/30)**

(54) **LAMINATED BODY AND TAPE WINDING PIPE**

LAMINIERTER KÖRPER UND BANDWICKELROHR

CORPS STRATIFIÉ ET TUYAU D'ENROULEMENT DE RUBAN

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **20.01.2017  JP 2017008362**
**13.03.2017  JP 2017047826**

(43) Date of publication of application:
**27.11.2019  Bulletin 2019/48**

(60) Divisional application:
**23171458.5**

(73) Proprietor: **Mitsui Chemicals, Inc.**
**Tokyo 104-0028 (JP)**

(72) Inventors:
• **ISAKI, Takeharu**
**Sodegaura-shi**
**Chiba 299-0265 (JP)**
• **UZAWA, Kiyoshi**
**Hakusan-shi**
**Ishikawa 924-0838 (JP)**
• **ISHIKAWA, Junichi**
**Sodegaura-shi**
**Chiba 299-0265 (JP)**
• **KIKUCHI, Kazuaki**
**Sodegaura-shi**
**Chiba 299-0265 (JP)**
• **IWATA, Shigeki**
**Sodegaura-shi**
**Chiba 299-0265 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 541 312      EP-A1- 1 593 491**
**JP-A- H 091 713       JP-A- H 091 713**
**JP-A- S6 174 836      JP-A- 2003 019 763**
**JP-A- 2007 054 399    JP-A- 2011 182 950**
**JP-A- 2013 094 178    JP-A- 2016 506 312**

EP 3 572 225 B1

(52) Cooperative Patent Classification (CPC): (Cont.)
B32B 2305/07; B32B 2305/10; B32B 2307/30;
B32B 2309/06; B32B 2323/10; B32B 2597/00

2

**Description**

Technical field

The present invention relates to a laminate excellent particularly in strength, moldability and molded appearance, as a fiber-reinforced thermoplastic molded article to be used in the industrial field. Further, the present invention relates to a tape winding pipe excellent in balance between bending rigidity and compressive rigidity.

Background Art

Resin impregnated fiber reinforced molded articles are widely used in the industrial material field from the standpoint of mechanical strength and light weight with respect to metal materials. In particular, carbon resin impregnated fiber reinforced molded articles are known to have a performance that reflects excellent mechanical properties and light weight of the carbon fiber.

When a thermoplastic resin is used as a resin component of the resin impregnated fiber reinforced molded article, there is an advantage that the degree of freedom of moldability is high as compared with the case of using a thermosetting resin. In order to improve the strength, it is effective to unidirectionally aligned reinforcing fibers such as carbon fibers. However, in that case, since the anisotropy of the strength is dominant, the applicable types of practical products are limited. Furthermore, it is difficult to control the moldability and molded appearance during thermoforming. Therefore, a technique to solve these problems is needed. For example, Patent Document 1 discloses such a technique.

As a method of controlling anisotropy using a resin impregnated fiber reinforced sheet, a method of laminating resin impregnated fiber reinforced sheets and melt press molding the laminate is typical.

Further, for example, Patent Document 2 describes a method of manufacturing a tape winding pipe by winding a reinforcing fiber impregnated with a resin around a winding core.

EP 1 593 491 A1 relates to a layered product which is a molded object comprising a thermoset resin layer, a thermoplastic resin layer, and reinforcing fibers comprising many continuous filaments, wherein the thermoset resin layer has been united with the thermoplastic resin layer at the interface between these layers, the resin of the thermoset resin layer and the resin of the thermoplastic resin layer each having an irregular surface shape at the interface, and a group of filaments among the reinforcing fibers are in contact with at least the resin of the thermoset resin layer and the other group of filaments among the reinforcing fibers are in contact with at least the resin of the thermoplastic resin layer, that side of the thermoplastic resin layer which is opposite to the interface being a surface of the molded object.

EP 1 541 312 A1 relates to a fiber-reinforced composite material that is produced using a prepreg comprising reinforcing fiber, a sheet-like reinforcing fiber substrate containing reinforcing fiber, and a matrix resin, wherein the matrix resin is impregnated into the sheet-like reinforcing fiber substrate and also covers one surface of the sheet-like reinforcing fiber substrate, and the matrix resin impregnation ratio is within a range of 35% to 95%.

JP H09 1713 A relates to a fiber-reinforced type laminated structure which is molded by laminating a plurality of fiber sheets, the fiber orienting angle $\theta$ between the neighboring sheets is set at 60° < $\theta$< 90° (isotropic material) for a plurality of the laminated fiber sheets.

CITATION LIST

Patent-Literature

Patent Document 1: JP 2013-208725
Patent Document 2: JP 2015-505753

SUMMARY OF INVENTION

Technical Problem

However, the present inventors faced a phenomenon that a direction in which melt flow easily occurs and a direction in which melt flow is difficult to occur are generated when laminating resin impregnated fiber reinforced sheets and melt press molding the laminate. This phenomenon is thought to originate from the orientation of fibers. Therefore, it is necessary to use a mold without fail in melt press molding of resin impregnated fiber reinforced sheets. Moreover, if the melt flow is nonuniform, there is a possibility that the strength originally possessed by the resin impregnated fiber reinforced sheet cannot be exhibited sufficiently.

That is, the first object of the present invention is to provide a laminate having a specific structure which is easy to control in shape in a molding method such as especially melt press molding. More specifically, the object of the present invention is to provide a laminate having a structure which is substantially similar in shape between a shape before melt pressing and a shape after pressing and which is expected to give a laminate having a homogeneous resin impregnated fiber reinforced layer even after melt pressing.

Furthermore, the present inventors noticed that the conventional tape winding pipe sometimes has poor balance between bending rigidity (difficulty in pipe bending) and compressive rigidity (difficulty of pipe collapse). Specifically, there are cases where the bending rigidity is high but the compressive rigidity is low, or the compressive rigidity is high but the bending rigidity is low.

That is, the second object of the present invention is to provide a tape winding pipe excellent in balance between bending rigidity and compressive rigidity.

Solution to Problem

The present inventors have intensively studied to solve the above problems and resultantly found that it is effective to laminate five or more resin impregnated fiber reinforced composition layers in which fibers are oriented unidirectionally. The present inventors have also found that it is very effective to use a laminate in which the orientations of respective resin impregnated fiber reinforced composition layers are in a specific relationship. Furthermore, the present inventors have found that it is very effective to satisfy a specific relationship with respect to the orientation directions of the fibers of respective resin impregnated fiber reinforced composition layers constituting the pipe. That is, the present invention is specified by the following matters.

[1] A laminate having a laminated structure of five or more layers wherein each layer is a resin impregnated fiber reinforced composition layer in which fibers are oriented unidirectionally, and the resin in the resin impregnated fiber reinforced composition layer is a polymer having the melting point or the glass-transition temperature of the polymer of 50 to 300°C, and the laminate having a laminated structure with a plurality of unit layers each having five layers ($\alpha$-1) to ($\varepsilon$-1) as one unit layer that satisfy the following requirements (A-i) and (A-ii), wherein the laminated structure has symmetric planes as a layer:
Requirement (A-i): the layers ($\alpha$-1) to ($\varepsilon$-1) are each a resin impregnated fiber reinforced composition layers in which fibers are oriented unidirectionally:
Requirement (A-ii): the angles of the orientation axes of the layers ($\alpha$-1) to ($\varepsilon$-1) satisfy the following relationship:

($\alpha$-1) layer: 0° (assumed as reference axis)
($\beta$-1) layer: 28° to 42°
($\gamma$-1) layer: 83° to 97°
($\delta$-1) layer: -28° to -42°
($\varepsilon$-1) layer: -2° to 2°.

Advantageous Effects of invention

The laminate of the present invention has a specific structure which is easy to control in shape. Specifically, by controlling the orientations of respective resin impregnated fiber reinforced composition layers to a specific relationship, the shape before melt pressing and the shape after pressing become substantially similar, and a desired shape can be obtained even without control by a mold. In addition, since it is anticipated that the disorder of the structure at the time of molding is small, it is expected that a laminate having homogeneous resin impregnated fiber reinforced layers and excellent in strength relatively can be obtained.

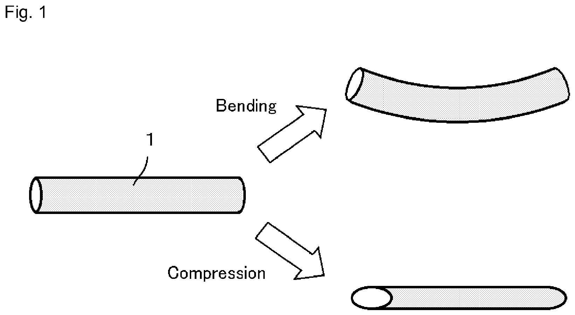

The tape winding pipe of the present invention is excellent in balance between bending rigidity and compressive rigidity. Rigidity for both bending and compression may be required for the pipe. As shown in FIG. 1, bending and compression of the pipe 1 are different phenomena. According to the findings of the present inventors, both characteristics change depending on the winding angle (lamination angle). When the central axis of the pipe is taken as the reference axis (0°), for example, in a pipe bending test (3-point bending or 4-point bending), by winding at a lamination angle close to 0° with respect to the axial direction of the pipe, the bending rigidity is high but the compressive rigidity is low. Conversely, by winding at a lamination angle close to 90° with respect to the axial direction of the pipe, the compressive rigidity is high but the bending rigidity is low. On the other hand, in the present invention, a tape winding pipe excellent in balance between bending rigidity and compressive rigidity can be obtained by controlling the lamination angle to specific relationship.

Brief Explanation of Drawing

FIG. 1 is a schematic view showing states of bending and compression of a pipe 1.

Modes for Carrying Out the Invention

As the resin impregnated fiber reinforced composition layer constituting each layer of the laminate of the present invention, a known resin impregnated fiber reinforced composition layer in which fibers are oriented unidirectionally can be used without limitation. The fiber (hereinafter also referred to as "reinforcing fiber") in the resin impregnated fiber reinforced composition layer is preferably at least one fiber selected from the group consisting of carbon fibers and inorganic oxide fibers. Specific examples thereof include metal oxide fibers, glass fibers, MOS-HIGE (basic magnesium sulfate inorganic fiber) and calcium carbonate whisker. As the inorganic oxide fiber, glass fibers are particularly preferable. As the carbon fiber, known carbon fibers can be used without limitation. Among the above reinforcing fibers, carbon fibers are most preferable.

As the resin for forming the resin impregnated fiber reinforced composition layer, any known material can be used without any limitation as long as it is a polymer (thermoplastic resin) having a melting point or glass-transition temperature of 50 to 300°C. Specifically, known thermoplastic resins known to be usable for reinforcing fiber sheets can be used without limitation. Specific examples thereof include an acrylic polymer, a polyester-based polymer, a polycarbonate-based polymer, a polyamide-based polymer, a styrene-based polymer and an olefin-based polymer. In consideration of future environmental problems, an olefin-based polymer is preferable, a propylene-based polymer and an ethylene-based polymer are more preferable, and a propylene-based polymer is most preferable.

A first embodiment (laminate) of the present invention is a laminate having a laminated structure with a plurality of unit layers each having five layers ($\alpha$-1) to ($\varepsilon$-1) as one unit layer that satisfy the following requirements (A-i) and (A-ii) wherein the laminated structure has symmetric planes as a layer:

Requirement (A-i): the layers ($\alpha$-1) to ($\varepsilon$-1) are each a resin impregnated fiber reinforced composition layer in which fibers are oriented unidirectionally:

Requirement (A-ii): the angles of the orientation axes of the layers ($\alpha$-1) to ($\varepsilon$-1) satisfy the following relationship:

> ($\alpha$-1) layer: 0° (assumed as reference axis)
> ($\beta$-1) layer: 28° to 42°
> ($\gamma$-1) layer: 83° to 97°
> ($\delta$-1) layer: -28° to -42°
> ($\varepsilon$-1) layer: -2° to 2°.

A second, preferred embodiment (tape winding pipe) of the present invention is a tape winding pipe comprising the laminate of the present invention, wherein the tape winding pipe has a laminated structure which has, as the layer minimum constitution, three layers ($\alpha$-2) to ($\gamma$-2) from the inner surface of the pipe and three layers ($\delta$-2) to ($\zeta$-2) from the outer surface of the pipe being symmetrical to the inner surface, and satisfy the following requirements (B-i) and (B-ii), and which optionally has a plurality of layers of arbitrary angles therebetween:

Requirement (B-i): the layers ($\alpha$-2) to ($\zeta$-2) are each a resin impregnated fiber reinforced composition layer in which fibers are oriented unidirectionally:

Requirement (B-ii): when the central axis of the pipe is taken as the reference axis, the angles of the orientation axes of the layers ($\alpha$-2) to ($\zeta$-2) with respect to the reference axis satisfy the following relationship:

> ($\alpha$-2) layer: 60° to 85°
> ($\beta$-2) layer: -85° to -60°
> ($\gamma$-2) layer: 0° to 40°
> ($\delta$-2) layer: -40° to 0°
> ($\varepsilon$-2) layer: 60° to 85°
> ($\zeta$-2) layer: -85° to -60°
> wherein, the layer ($\alpha$-2) and the layer ($\beta$-2), and the layer ($\varepsilon$-2) and the layer ($\zeta$-2) may partially intersect with each other by traverse winding:
> in the case of a pipe constituted of six layers, the layer ($\gamma$-2) and the layer ($\delta$-2) may partially intersect with each other by traverse winding.

The layers ($\alpha$-1) to ($\varepsilon$-1) of the first embodiment and the layers ($\alpha$-2) to ($\zeta$-2) of the second embodiment are resin impregnated fiber reinforced composition layers. Preferred examples of the resin impregnated fiber reinforced composition constituting these layers include compositions containing a reinforcing fiber (C), a polymer (I) having a structural unit with 2 to 20 carbon atoms and having a melting point or glass-transition temperature of 50 to 300°C, and preferably a dye (II). More preferred examples of the resin impregnated fiber reinforced composition include compositions containing a reinforcing fiber bundle (bundle of reinforcing fiber (C)) described later, a matrix resin (example of polymer (I)), and preferably a dye (II).

The reinforcing fiber bundle preferably contains a propylene-based resin (A) containing olefin units with 2 to 20 carbon atoms in which the content of a propylene unit is preferably 50 mol% or more, a propylene-based resin (B) containing at least a carboxylic acid salt bonded to the polymer chain and a reinforcing fiber (C).

The propylene-based resin (A) in the reinforcing fiber bundle preferably contains a component (A-1) having a weight-average molecular weight of over 50,000 in an amount of over 60% by mass and 100% by mass or less and a component (A-2) having a weight-average molecular weight of 100,000 or less in an amount of 0 to 40% by mass (wherein, the sum of the component (A-1) and the component (A-2) is 100% by mass, and the molecular weight of (A-1) > the molecular weight of (A-2)). Here, the weight-average molecular weight of the propylene-based resin (A) is higher than the weight-average molecular weight of the propylene-based resin (B). The preferred content of the component (A-1) is greater than 70% by mass and 100% by mass or less. The preferable melting point or glass-transition temperature of the propylene-based resin (A) is 0 to 165°C. Resins not showing melting point may be used in some cases.

The amount of the propylene-based resin (B) in the reinforcing fiber bundle is preferably 3 to 50 parts by mass, more preferably 5 to 45 parts by mass and particularly preferably 10 to 40 parts by mass, with respect to 100 parts by mass of the propylene-based resin (A). The total amount of the propylene-based resin (A) and the propylene-based resin (B) is preferably 5 to 60% by mass, more preferably 3 to 55% by mass and particularly preferably 3 to 50% by mass, with respect to 100% by mass of the whole reinforcing fiber bundle.

As the reinforcing fiber (C), for example, high strength and high elastic modulus fibers such as carbon fibers, glass fibers, aramid fibers, alumina fibers, silicon carbide fibers, boron fibers and metal fibers can be used. These may be used alone or in combination of two or more. Among them, carbon fibers are preferred. From the viewpoints of improvement of mechanical properties and weight reduction of molded articles, PAN-based, pitch-based or rayon-based carbon fibers are preferable as the carbon fiber. Further, from the viewpoint of balance between the strength and the elastic modulus of the resulting molded article, PAN-based carbon fibers are particularly preferable. Reinforcing fibers endowed with conductivity, for example, reinforcing fibers containing metals such as nickel, copper and ytterbium can also be used. The metal is preferably contained in such a form as to cover the reinforcing fiber.

In the carbon fiber, the surface oxygen concentration ratio [O/C] which is the ratio of the number of oxygen (O) atoms to the number of carbon (C) atoms on the fiber surface measured by X-ray photoelectron spectroscopy is preferably 0.05 to 0.5, more preferably 0.08 to 0.4, and particularly preferably 0.1 to 0.3. When the surface oxygen concentration ratio is 0.05 or more, the amount of functional groups on the surface of the carbon fiber can be secured, and stronger adhesion with the resin can be obtained. The upper limit of the surface oxygen concentration ratio is not particularly limited, but from the viewpoint of balance between handling property and productivity of the carbon fiber, 0.5 or less is generally preferred.

The surface oxygen concentration ratio [O/C] of the carbon fiber can be determined by X-ray photoelectron spectroscopy according to the following procedure. First, a sizing agent adhering to the carbon fiber surface is removed with a solvent, and the carbon fiber bundle is cut to 20 mm. This is spread and aligned on a copper sample holder, A1K$\alpha$1,2 are used as the X-ray source and the pressure in the sample chamber is kept at $1 \times 10^8$ Torr. The kinetic energy value (K.E.) of the main peak of $C_{1s}$ is set to 1202 eV as the correction value of the peak associated with the charging at the time of measurement. Then, the $C_{1s}$ peak area is obtained by drawing a straight baseline in the range of 1191 to 1205 eV as K.E. Further, the $O_{1s}$ peak area is obtained by drawing a straight baseline in the range of 947 to 959 eV as K.E. The surface oxygen concentration ratio [O/C] is calculated as the atomic number ratio by using the ratio of the $O_{1s}$ peak area and the $C_{1s}$ peak area and the sensitivity correction value intrinsic to the apparatus. As an X-ray photoelectron spectroscopic apparatus, Model ES-200 manufactured by Kokusai electric Inc. is used, and the sensitivity correction value is set to 1.74.

A method of controlling the surface oxygen concentration ratio [O/C] to 0.05 to 0.5 is not particularly limited. For example, it can be controlled by methods such as electrolytic oxidation treatment, chemical solution oxidation treatment and vapor phase oxidation treatment. Among them, the electrolytic oxidation treatment is preferable.

Although the average fiber diameter of the reinforcing fiber (C) is not particularly limited, it is preferably 1 to 20 $\mu$m, more preferably 3 to 15 $\mu$m in view of the mechanical characteristics and surface appearance of the resulting molded article. Although the number of single yarns of the reinforcing fiber bundle is not particularly limited, it is usually 100 to 350,000, preferably 1,000 to 250,000, and more preferably 5,000 to 220,000. Furthermore, since the propylene-based resin (A) and the propylene-based resin (B) described below are used in the present invention, it is also expected that the fiber bundle having a fiber number of 40,000 or more (large tow) will exhibit an excellent effect.

The weight-average molecular weight of the component (A-1) [hereinafter also referred to as "propylene-based resin component (A-1)"] contained in the propylene-based resin (A) in the reinforcing fiber bundle is over 50,000, preferably 70,000 or more, and more preferably 100,000 or more. The upper limit of the weight-average molecular weight of the propylene-based resin component (A-1) is not particularly limited, but it is preferably 700,000, more preferably 500,000, particularly preferably 450,000 and most preferably 400,000, from the viewpoint of melt fluidity at the time of molding and appearance of the molded article.

When the total of the component (A-1) and the component (A-2) is taken as 100% by mass, the amount of the propylene-based resin component (A-1) is over 60% by mass and 100% by mass or less, preferably 70 to 100% by mass, particularly preferably 73 to 100% by mass.

The weight-average molecular weight of the component (A-2) [hereinafter also referred to as "propylene-based resin component (A-2)"] contained in the propylene-based resin (A) as required is 100,000 or less, preferably 50,000 or less, more preferably 40,000 or less. The lower limit of the weight-average molecular weight of the propylene-based resin component (A-2) is preferably 10,000, more preferably 15,000, particularly preferably 20,000 and most preferably 25,000, from the viewpoint of strength and handling properties (such as tackiness) of the reinforcing fiber bundle.

When the total of the component (A-1) and the component (A-2) is taken as 100% by mass, the amount of the propylene-based resin component (A-2) is 0 to 40% by mass, preferably 0 to 30% by mass, more preferably 0 to 27% by mass.

The difference between the weight-average molecular weight of the propylene based resin component (A-1) and the weight-average molecular weight of the propylene based resin component (A-2) is preferably 20,000 to 300,000, more preferably 30,000 to 200,000, further preferably 35,000 to 200,000.

Since the propylene-based resin (A) contains a relatively large amount of the propylene-based resin component (A-1) having high weight-average molecular weight, even if the amount of the propylene-based resin (A) used for the reinforcing fiber bundle is relatively small, there is a tendency that a problem of fuzz, problems of shape change such as collapse, peeling and folding due to factors such as impact and a problem of generation of a fine powder due to them hardly occur.

The propylene-based resin (A) is a resin having a structural unit derived from propylene, and is usually a polymer of propylene. In particular, copolymers containing a structural unit derived from at least one kind of olefin (excluding propylene) or polyene selected from $\alpha$-olefins, conjugated dienes and non-conjugated dienes together with a structural unit derived from propylene are preferred.

Specific examples of the $\alpha$-olefin include $\alpha$-olefins with 2 to 20 carbon atoms excluding propylene such as ethylene, 1-butene, 3-methyl-1-butene, 4-methyl-1-pentene, 3-methyl-1-pentene, 4-methyl-1-hexene, 4,4-dimethyl-1-hexene, 1-nonene, 1-octene, 1-heptene, 1-hexene, 1-decene, 1-undecene, 1-dodecene, 1-tetradecene, 1-hexadecene, 1-octadecene and 1-eicosene. Of them, 1-butene, ethylene, 4-methyl-1-pentene and 1-hexene are preferable, and 1-butene and 4-methyl-1-pentene are more preferable.

Specific examples of the conjugated diene and the non-conjugated diene include butadiene, ethylidene norbornene, dicyclopentadiene and 1,5-hexadiene.

Two or more kinds of the above-mentioned $\alpha$-olefins, conjugated dienes and non-conjugated dienes may be used in combination.

The propylene-based resin (A) is preferably a random or block copolymer composed of propylene and the above-mentioned olefin or polyene compound. As long as the object of the present invention is not impaired, other olefin-based polymers can be used together with the propylene-based resin (A). As the other olefin-based polymers, for example, an ethylene-propylene copolymer, an ethylene-1-butene copolymer and an ethylene-propylene-1-butene copolymer are preferable.

The proportion of the structural unit derived from propylene in the propylene-based resin (A) is preferably 50 to 100 mol%, more preferably 50 to 99 mol%, particularly preferably 55 to 98 mol% and most preferably 60 to 97 mol%, from the viewpoint of enhancing the affinity with the propylene-based resin (D) (generally referred to as a matrix resin) and the propylene-based resin (B) described later.

For the identification of monomer repeating units in the propylene-based resin (A), the $^{13}$C NMR method is generally used. Mass spectrometry and elemental analysis may be used in some cases. Further, it is also possible to use a method in which IR analysis of plural types of copolymers having different compositions determined by the NMR method is carried out and a calibration curve is created from information on absorption of specific wavenumber and thickness of a specimen and the composition is determined. This IR method is preferably used for process analysis.

It is preferable that the propylene-based resin (A) has a Shore A hardness of 60 to 90 or a Shore D hardness of 45 to 65. A more preferable range of the Shore A hardness is 65 to 88, and particularly preferably 70 to 85. A more preferable range of the Shore D hardness is 48 to 63, and particularly preferably 50 to 60. When the Shore A hardness or the Shore D hardness of the propylene-based resin (A) is within these ranges, the following property to the reinforcing fiber is good, partial cracks hardly occur, and the reinforcing fiber bundle of a stable shape is easy to form. Further, it tends to be advantageous for enhancing the strength of a composition combined with the propylene-based resin (D) described later. It is presumed that this is because the propylene-based resin (A) and the propylene-based resin (D) have a good entanglement structure of molecular chains.

The propylene-based resin (A) may be modified with a compound containing a carboxylic acid group or a carboxylate group, or may be an unmodified product. When the propylene-based resin (A) is a modified product, its modification amount is preferably less than 2.0 mmol equivalent, more preferably 1.0 mmol equivalent or less, particularly preferably 0.5 mmol equivalent or less in terms of the group represented by -C(=O)-O-. When the propylene-based resin (A) is a modified product, the propylene-based resin component (A-2) is preferably a modified product.

On the other hand, depending on the application to be used, the propylene-based resin (A) may be preferably substantially unmodified in some cases. Here, substantially unmodified means that it is desirably not modified at all, but even if it is modified, it does not impair the above-described object. Its modification amount is preferably less than 0.05 mmol equivalent, more preferably 0.01 mmol equivalent or less, particularly preferably 0.001 mmol equivalent or less, most preferably 0.0001 mmol equivalent or less in terms of the group represented by -C(=O)-O-.

The propylene-based resin (B) is a propylene-based resin containing at least a carboxylic acid salt bonded to the polymer chain. This carboxylic acid salt is effective in enhancing the interaction with the reinforcing fiber (C).

Of raw materials of the propylene-based resin (B), the propylene-based polymer includes, for example, a propylene homopolymers; and copolymers composed of propylene and one or more α- olefins typified by an ethylene-propylene copolymer, a propylene-1-butene copolymer and an ethylene-propylene-1-butene copolymer. Among the raw materials, the monomer having a carboxylic acid structure includes, for example, a monomer having a carboxylic acid group which is neutralized or not neutralized and a monomer having a carboxylic acid ester which is saponified or not saponified. Radical graft polymerization of such a propylene-based polymer and a monomer having a carboxylic acid structure is a typical method for producing the propylene-based resin (B). Specific examples of the olefins used in the propylene-based polymer are the same as the olefins used in the propylene-based resin (A).

There is also a possibility that by using a special catalyst, propylene and a monomer having a carboxylic acid ester can be directly polymerized to obtain a propylene-based resin (B), and in the case of a polymer containing a large amount of ethylene, ethylene and propylene and a monomer having a carboxylic acid structure can be high pressure radical-polymerized to obtain a propylene-based resin (B).

The monomer having a carboxylic acid group which is neutralized or not neutralized and the monomer having a carboxylic acid ester group which is saponified or not saponified include, for example, ethylene-based unsaturated carboxylic acids, anhydrides thereof and esters thereof; and compounds having an unsaturated vinyl group other than olefins.

Specific examples of the ethylene-based unsaturated carboxylic acid include (meth)acrylic acid, maleic acid, fumaric acid, tetrahydrophthalic acid, itaconic acid, citraconic acid, crotonic acid and isocrotonic acid. Specific examples of the anhydride include Nadic acid ™ (endocis-bicyclo[2.2.1]hept-5-ene-2,3-dicarboxylic acid), maleic anhydride and citraconic anhydride.

Specific examples of the monomer having an unsaturated vinyl group other than olefins include (meth)acrylic acid esters such as methyl (meth)acrylate, ethyl (meth)acrylate, propyl (meth)acrylate, n-butyl (meth)acrylate, i-butyl (meth)acrylate, tert-butyl (meth)acrylate, n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, octadecyl (meth)acrylate, stearyl (meth)acrylate, tridecyl (meth)acrylate, lauroyl (meth)acrylate, cyclohexyl (meth)acrylate, benzyl (meth)acrylate, phenyl (meth)acrylate, isobornyl (meth)acrylate, dicyclopentanyl (meth)acrylate, dicyclopentenyl (meth)acrylate, dimethylaminoethyl (meth)acrylate and diethylaminoethyl (meth)acrylate, hydroxyl group-containing vinyls such as hydroxyethyl acrylate, 2-hydroxyethyl (meth)acrylate, 2-hydroxypropyl (meth)acrylate, 4-hydroxybutyl acrylate, lactone-modified hydroxyethyl (meth)acrylate and 2-hydroxy-3-phenoxypropyl acrylate, epoxy group-containing vinyls such as glycidyl (meth)acrylate and methylglycidyl (meth)acrylate, isocyanate group-containing vinyls such as vinyl isocyanate and isopropenyl isocyanate, aromatic vinyls such as styrene, α-methylstyrene, vinyltoluene and t-butylstyrene, amides such as acrylamide, methacrylamide, N-methylolmethacrylamide, N-methylolacrylamide, diacetoneacrylamide and maleic acid amide, vinyl esters such as vinyl acetate and vinyl propionate, aminoalkyl (meth)acrylates such as N,N-dimethylaminoethyl (meth)acrylate, N,N-diethylaminoethyl (meth)acrylate, N,N-dimethylaminopropyl (meth)acrylate, N,N-dipropylaminoethyl (meth)acrylate, N,N-dibutylaminoethyl (meth)acrylate and N,N-dihydroxyethylaminoethyl (meth)acrylates, unsaturated sulfonic acids such as styrenesulfonic acid, sodium styrenesulfonate and 2-acrylamido-2-methylpropane sulfonic acid, and unsaturated phosphoric acids such as mono(2-methacryloyloxyethyl) acid phosphate and mono(2-acryloyloxyethyl) acid phosphate.

Two or more of these monomers may be used in combination. Among them, acid anhydrides are preferable, and maleic anhydride is more preferable.

The propylene-based resin (B) can be obtained by various methods as described above. More specifically, for example, there are a method of reacting a propylene-based polymer and an ethylene-based unsaturated carboxylic acid having an unsaturated vinyl group or a monomer having an unsaturated vinyl group other than olefins in an organic solvent in the presence of a polymerization initiator, then, removing the solvent; a method of reacting a carboxylic acid having an unsaturated vinyl group and a polymerization initiator under stirring with a melt obtained by heating and melting a propylene-based polymer; and a method of feeding a mixture of a propylene-based polymer, a carboxylic acid having an unsaturated vinyl group and a polymerization initiator to an extruder and reacting them while kneading with heat, then, producing a carboxylic acid salt by a method such as neutralization and saponification.

Specific examples of the polymerization initiator include various peroxide compounds such as benzoyl peroxide, dichlorobenzoyl peroxide, dicumyl peroxide, di-tert-butyl peroxide and 2,5-dimethyl-2,5-di(peroxybenzoate)hexyne-3,1,4-bis(tert-butylperoxyisopropyl)benzene. Azo compounds such as azobisisobutyronitrile may also be used. Two or more polymerization initiators may be used in combination.

Specific examples of the organic solvent include aromatic hydrocarbons such as xylene, toluene and ethylbenzene; aliphatic hydrocarbons such as hexane, heptane, octane, decane, isooctane and isodecane; alicyclic hydrocarbons such as cyclohexane, cyclohexene, methylcyclohexane and ethylcyclohexane; ester solvents such as ethyl acetate, n-butyl acetate, cellosolve acetate, propylene glycol monomethyl ether acetate, propylene glycol monoethyl ether acetate and 3-methoxybutyl acetate; and ketones such as methyl ethyl ketone and methyl isobutyl ketone. Mixtures of two or more organic solvents may be used. Among these, aromatic hydrocarbons, aliphatic hydrocarbons and alicyclic hydrocarbons are preferable, and aliphatic hydrocarbons and alicyclic hydrocarbons are more preferable.

It is well known that the content of carboxylic acid groups in the propylene-based resin (B) can be determined by NMR or IR measurement described later. It is also possible to specify the content of carboxylic acid groups by the acid value. The acid value of the propylene-based resin (B) is preferably 10 to 100 mg-KOH/g, more preferably 20 to 80 mg-KOH/g, particularly preferably 25 to 70 mg-KOH/g, most preferably 25 to 65 mg-KOH/g.

The method of obtaining the propylene-based resin (B) through the neutralization or saponification step is a practically preferred method because it facilitates processing of the raw material of the propylene-based resin (B) as an aqueous dispersion.

Specific examples of the basic substance used for neutralization or saponification of the aqueous dispersion include alkali metals or alkaline earth metals or other metals such as sodium, potassium, lithium, calcium, magnesium and zinc; inorganic amines such as hydroxylamine and ammonium hydroxide; organic amines such as ammonia, (tri)methylamine, (tri)ethanolamine, (tri)ethylamine, dimethylethanolamine and morpholine; oxides, hydroxides and hydrides of alkali metals or alkaline earth metals and other metals such as sodium oxide and sodium peroxide; and weak acid salts of alkali metals or alkaline earth metals or other metals such as sodium carbonate. The carboxylic acid salt or carboxylic acid ester group neutralized or saponified with a basic substance is preferably a carboxylic acid alkali metal salt such as sodium carboxylate or potassium carboxylate; or ammonium carboxylate.

The degree of neutralization or degree of saponification, that is, the conversion rate of the carboxylic acid group of the raw material of the propylene-based resin (B) to a carboxylic acid salt such as a metal salt or an ammonium salt is usually 50 to 100%, preferably 70 to 100 %, more preferably from 85 to 100%, from the viewpoint of the stability of the aqueous dispersion and the adhesion to the fiber. It is preferable that all the carboxylic acid groups in the propylene-based resin (B) are neutralized or saponified with a basic substance, but a part of carboxylic acid groups may remain without being neutralized or saponified.

As a method of analyzing the salt component of the carboxylic acid group, for example, there are a method of detecting a metal species forming a salt by ICP emission spectrometry and a method of identifying the structure of a salt of an acid group using IR, NMR, mass spectrometry or elemental analysis.

As a method for calculating the conversion rate of the carboxylic acid group to the neutralized salt, for example, there is a method in which the propylene-based resin (B) is dissolved in heated toluene, titrated with a 0.1 N potassium hydroxide-ethanol standard solution, the acid value of the propylene-based resin (B) is determined by the following formula and compared with the total number of moles of the original carboxylic acid group, to calculate the conversion rate.

$$\text{Acid value} = (5.611 \times A \times F)/B \text{ (mg-KOH/g)}$$

A: use amount (ml) of 0.1 N potassium hydroxide-ethanol standard solution
F: factor of 0.1 N potassium hydroxide-ethanol standard solution
B: sampling volume (g)

Next, the acid value calculated by the above method is converted into the number of moles of the carboxylic acid group not neutralized using the following formula.

$$\text{Number of moles of carboxylic acid group not neutralized} = \text{acid value} \times 1000/56 \text{ (mol/g)}$$

Then, using the total number of moles (mol/g) of carboxylic acid groups calculated separately by performing the quantitative determination of the carbonyl carbon of the carboxylic acid group by methods such as IR, NMR and elemental analysis, the conversion rate of the carboxylic acid group to the neutralized salt is calculated according to the following formula.

$$\text{Conversion rate\%} = (1\text{-}r) \times 100 \ (\%)$$

r: number of moles of carboxylic acid group not neutralized/total number of moles of carboxylic acid group

From the viewpoint of enhancing the interaction with the reinforcing fiber (C), the content of the carboxylic acid salt bonded to the polymer chain of the propylene-based resin (B) described above is preferably 0.05 to 5 mmol equivalent in total in terms of the group represented by -C(=O)-O- per 1 g of the propylene-based resin (B). It is more preferably 0.1 to 4 mmol equivalent, particularly preferably 0.3 to 3 mmol equivalent. As a method of analyzing the content of the carboxylic acid salt as described above, there are a method of quantitatively detecting the metal species forming a salt by ICP emission spectrometry, a method of quantitatively detecting the carbonyl carbon of a carboxylic acid salt using IR, NMR and elemental analysis. More specific methods for measuring the content of the carboxylic acid skeleton can be exemplified by the following methods. The content of the carboxylic acid skeleton can be specified according to ordinary methods by the $^{13}$C NMR method under high temperature solution conditions of 120°C or more under conditions of 100 MHz or more of the sample. Further, there is also known a method in which a plurality of samples having different contents of the carbonyl skeleton are measured by the $^{13}$C NMR described above to specify the content of the carboxylic acid skeleton, then, IR measurement of the same sample is performed to prepare a calibration curve of the ratio of the characteristic absorption of carbonyl to sample thickness and other typical absorption and the content of the carboxylic acid skeleton, thereby, the introduction rate of the carboxylic acid skeleton is specified by IR measurement.

The weight-average molecular weight of the propylene-based resin (A) is higher than the weight-average molecular weight of the propylene-based resin (B). The difference between the two is preferably 10,000 to 380,000, more preferably 120,000 to 380,000, particularly preferably 130,000 to 380,000. As a result, it is expected that the propylene-based resin (B) is easy to move during molding, and the interaction between the reinforcing fiber (C) and the propylene-based resin (B) is strengthened.

The weight-average molecular weight of the propylene-based resin (B) is preferably 1,000 to 100,000, more preferably 2,000 to 80,000, particularly preferably 5,000 to 50,000 and most preferably 5,000 to 30,000, from the viewpoint of the above-described interaction and the compatibility with the propylene-based resin (A), particularly the compatibility with the propylene-based resin (A-2).

The weight-average molecular weight is determined by gel permeation chromatography (GPC).

The melt flow rate (ASTM 1238 standard, 230°C, 2.16 kg load) of the propylene-based resin (B) is preferably 3 to 500 g/10 min, more preferably 5 to 400 g/10 min, particularly preferably 7 to 350 g/10 min.

A preferred range of the measured value of the melt flow rate at 190°C and 2.16 kg load according to ASTM 1238 standard may be the same numerical range as described above in some cases.

The propylene-based resin (A) and the propylene-based resin (B) can be brought into contact with the reinforcing fiber (C) in various forms. For example, the propylene-based resin (A) and the propylene-based resin (B) may be melted as it is or with a heat resistant stabilizer and brought into contact with the reinforcing fiber (C), or the propylene-based resin (A) and the propylene-based resin (B) may be brought into contact with the reinforcing fiber (C) in the form of an emulsion or a suspension. A heat treatment may be performed after the contacting step. In view of efficient contact with the reinforcing fiber (C), it is preferable that the propylene-based resin (A) and the propylene-based resin (B) are brought into contact with the reinforcing fiber (C) in an emulsion form.

As described above, the amount of the propylene-based resin (B) is preferably 3 to 50 parts by mass, more preferably 5 to 45 parts by mass, particularly preferably 5 to 40 parts by mass and most preferably 7 to 40 parts by mass, with respect to 100 parts by mass of the propylene-based resin (A). Within this range, it is possible to achieve a high level of compatibility between properties relating to strength and shape derived from the propylene-based resin (A) and affinity with the reinforcing fiber (C). When the amount of the propylene-based resin (B) is less than 3 parts by weight, there is a possibility that the affinity with the reinforcing fiber (C) decreases and the adhesive property is inferior. If the amount of the propylene-based resin (B) is more than 50 parts by mass, the strength of the mixture itself may decrease or fuzz may increase, and there is a possibility that strong adhesive properties cannot be maintained.

By setting the molecular weights and contents of the propylene-based resins (A) and (B) within the above-described ranges, it is expected that the propylene-based resins (A) and (B) effectively interact with the reinforcing fiber (C) and the matrix resin, the compatibility becomes relatively high, and the adhesiveness is improved.

In addition to the propylene-based resin (A) and the propylene-based resin (B), other components may be used in combination in the reinforcing fiber bundle as long as the effect of the present invention is not impaired. For example, when a propylene-based resin is applied as an emulsion form to the reinforcing fiber bundle, a surfactant for stabilizing the emulsion may be added. The amount of such other components is preferably 10% by mass or less, more preferably 5% by mass or less and particularly preferably 2% by mass or less, with respect to 100% by mass of the sum of the propylene-based resin (A) and the propylene-based resin (B).

The content of the propylene-based resin (A) and the propylene-based resin (B) is also preferably 0.3 to 5% by mass in 100% by mass of the whole reinforcing fiber bundle. In the present invention, the effect of the present invention can be obtained even if the content of the propylene-based resin (A) and the propylene-based resin (B) is relatively small. However, when the content is less than 0.3% by mass, there are cases where there are a large number of exposed portions of the reinforcing fiber (C), and the strength of the product obtained is reduced or handling property of the reinforcing fiber bundle may become insufficient in some cases. The handling property referred to here is, for example, the hardness of a fiber bundle or easiness of spread of a fiber bundle when winding the fiber bundle on a bobbin. Further, the handling property means, for example, the convergence of a chopped fiber bundle obtained by cutting a fiber bundle. On the other hand, when the content exceeds 5% by mass, problems such as extreme deterioration of the mechanical properties of the molded article, extreme hardening of the fiber bundle and inability to be wound around the bobbin may occur. The lower limit of this content is preferably 0.4% by mass from the viewpoint of the balance between adhesiveness and the handling property of the reinforcing fiber bundle. On the other hand, the upper limit is preferably 4% by mass, more preferably 3% by mass.

There are no particular restrictions on the method of adhering the propylene-based resins (A) and (B) to the reinforcing fiber bundle. From the viewpoint of making it easy to uniformly adhere between the monofilaments, it is preferable to apply an emulsion of a mixture of the propylene-based resin (A) and the propylene-based resin (B) to the reinforcing fiber bundle and then to dry the emulsion. As a method of applying an emulsion to the reinforcing fiber bundle, a known method such as a roller dipping method, a roller transfer method or a spray method can be used.

The matrix resin at the time of molding a molding resin composition or a molded article using the reinforcing fiber bundle is preferably the propylene-based polymer (D) described later. Further, other thermoplastic resins, for example, polycarbonate resins, styrene resins, polyamide resins, polyester resins, polyphenylene sulfide resins (PPS resin), modified polyphenylene ether resins (modified PPE resin), polyacetal resins (POM resin), liquid crystal polyesters, polyarylates, acrylic resins [e.g., polymethyl methacrylate resin (PMMA)], vinyl chloride, polyimides (PI), polyamideimides (PAI), polyetherimides (PEI), polysulfones, polyether sulfonse, polyketones, polyether ketones, polyether ether ketones (PEEK), polyolefins [e.g., polyethylene, polypropylene, polybutene, poly4-methyl-1-pentene], modified polyolefins, phenolic resins and phenoxy resins may be used. In addition, for example, an ethylene/propylene copolymer, an ethylene/1-butene copolymer, an ethylene/propylene/diene copolymer, an ethylene/carbon monoxide/diene copolymer, an ethylene/ethyl (meth)acrylate copolymer, an ethylene/glycidyl (meth)acrylate resin and an ethylene/vinyl acetate/glycidyl (meth)acrylate copolymer may also be used. One kind or two or more kinds of them may be used in combination. Among them, polyolefin-based resins having particularly low polarity are preferable, and from the viewpoint of cost and light weight of the molded article, ethylene-based polymers or propylene-based polymers are more preferable, and the propylene-based resin (D) described later is particularly preferred. That is, the reinforcing fiber bundle-containing propylene-based resin compositions are preferably used for the molding materials or molded articles.

The propylene-based resin (D) may be an unmodified propylene-based resin or may be a propylene-based resin containing a carboxylic acid structure or a carboxylic acid salt structure by a method such as modification. When both the unmodified resin and the propylene-based resin containing a carboxylic acid structure or a carboxylic acid salt structure are used, the mass ratio thereof (unmodified/modified ratio) is usually from 80/20 to 99/1, preferably from 89/11 to 99/1, more preferably 89/11 to 93/7, particularly preferably 90/10 to 95/5. Regarding the composition of the propylene-based resin (D), general propylene resins containing a structural unit derived from a monomer (such as an olefin or a carboxylic acid ester compound) described in the explanation of the propylene-based resin (A) and the propylene-based resin (B) are preferred. For example, propylene-based polymers such as homo polypropylene, random polypropylene, block polypropylene and modified polypropylene are mentioned.

A preferable embodiment as the propylene-based resin (D) is a composition containing an unmodified propylene-based resin and an acid-modified propylene-based resin. With such an embodiment, there is a tendency that the structure between the reinforcing fiber (C) and the resin does not easily change even by a laser fusion bonding method. This is presumably because even if the modified propylene-based resin component (A-2) is destroyed in the vicinity of the reinforcing fiber (C), the modified resin component of the propylene-based resin (D) complements it.

It is preferable that the weight-average molecular weight Mw (D) of the propylene resin (D) as the matrix resin, the weight-average molecular weight Mw (A) of the propylene-based resin (A) in the reinforcing fiber bundle and the weight-average molecular weight Mw (B) of the propylene-based resin (B) satisfy the following relationship.

$$Mw (A) > Mw (D) > Mw (B)$$

The specific weight-average molecular weight of the propylene-based resin (D) is preferably from 50,000 to 350,000, more preferably from 100,000 to 330,000, particularly preferably from 150,000 to 320,000. The difference in the molecular weight of the propylene-based resin (A) and the propylene-based resin (D) is preferably from 10,000 to 400,000, more preferably 20000 to 200000, particularly preferably 20,000 to 100,000.

It is preferable that the propylene-based resin (D) is adhered around the reinforcing fiber bundle containing the reinforcing fiber (C), the propylene-based resin (A) and the propylene-based resin (B).

The propylene-based resin (D) can be produced by a known method. The stereoregularity of the resin (polymer) may be isotactic, syndiotactic or atactic. The stereoregularity is preferably isotactic or syndiotactic.

The amount of the reinforcing fiber bundle in the resin impregnated fiber reinforced composition is 25 to 75 parts by mass, preferably 30 to 68 parts by mass, more preferably 35 to 65 parts by mass. When the propylene-based resin (D) is used as the olefin resin, the amount of the propylene-based resin (D) is 75 to 25 parts by mass, preferably 70 to 32 parts by mass, more preferably 65 to 35 parts by mass. However, these are amounts when the sum of the reinforcing fiber bundle and the propylene-based resin (D) is taken as 100 parts by mass.

Specific production methods of each of the above resins (particularly unmodified resin) are described in, for example, WO 2004/087775 pamphlet, WO 2006/057361 pamphlet, WO 2006/123759 pamphlet, JP 2007-308667, WO 2005/103141 pamphlet, JP 4675629, WO 2014/050817 pamphlet and JP 2013-237861.

The mass ratio of the reinforcing fiber (C) and the polymer (I) in the resin impregnated fiber reinforced composition is usually 80/20 to 20/80, preferably 75/25 to 30/70, more preferably 70/30 to 35/65, particularly preferably 65/35 to 40/60, most preferably 60/40 to 40/60. If the amount of the reinforcing fiber (C) is too large, tape peeling may easily occur on the tape winding molded article. On the other hand, if the amount of the polymer (I) is too large, the strength of the tape winding molded article may decrease.

The polymer (I) is preferably a propylene-based polymer. The melting point or glass-transition temperature of the polymer (I) is 50 to 300°C. The lower limit is preferably 70°C, more preferably 80°C. On the other hand, the upper limit is preferably 280°C, more preferably 270°C, particularly preferably 260°C. Further, the melting point is preferably within these temperature ranges, and the melting point is more preferably 250°C or lower, particularly preferably 240°C or lower.

It is preferable that the polymer (I) contains a carboxylic acid group. When the sum of the reinforcing fiber (C) and the polymer (I) is taken as 100% by mass, the content of the structural unit containing a carboxylic acid group in the resin is 0.010 to 0.045% by mass, preferably 0.012 to 0.040% by mass, particularly preferably 0.015 to 0.035% by mass. When the content of the structural unit containing a carboxylic acid group is too low, tape peeling tends to occur on the tape winding molded article in some cases. The structural unit containing a carboxylic acid group includes, for example, a structural unit derived from a carboxylic acid group and a structural unit derived from a carboxylic acid salt contained in the propylene-based resin (A), the propylene-based resin (B) and the propylene-based resin (D).

The content of the carboxylic acid group of the polymer (I) can also be grasped by its acid value. Its acid value is preferably 0.1 to 0.55 mg-KOH/g, more preferably 0.12 to 0.45 mg-KOH/g, particularly preferably 0.13 to 0.40 mg-KOH/g.

The melt flow rate (ASTM 1238 standard, 230°C, 2.16 kg load) of the polymer (I) is preferably 1 to 500 g/10 min, more preferably 3 to 300 g/10 min, particularly preferably 5 to 100 g/10 min.

The weight-average molecular weight of the polymer (I) is preferably 50,000 to 400,000, more preferably 100,000 to 370,000, particularly preferably 150,000 to 350,000.

As a method for producing an emulsion, known methods can be used and are described in, for example, WO 2007/125924 pamphlet, WO 2008/096682 pamphlet and JP 2008-144146.

As a method for specifying ease of loosening of the fiber bundle due to the above-mentioned factors such as fuzz, for example, a method described in JP 5584977 and a method for evaluating convergence described in JP 2015-165055 are known. In the embodiment of the present specification, the former evaluation is adopted. The latter method is, specifically, as follows.

The reinforcing fiber bundle is cut into short fibers of about 5 mm using stainless steel scissors. The obtained short fibers are evaluated by the following visual judgment.

A: Short fibers maintain almost the same state as before cutting.
B: Short fibers are largely loosened or cracked.

It is preferable for the single fiber forming the reinforcing fiber bundle that 60% or more of the surface of the single fiber is coated with a mixture containing the propylene-based resin (A) and the propylene-based resin (B) in order to exhibit stronger adhesiveness. The uncoated portion cannot exert adhesiveness and serves as a starting point of peeling, which sometimes reduces the overall adhesiveness. A state in which 70% or more is covered is more preferable, and a state in which 80% or more is covered is particularly preferable. The coated state can be evaluated by a scanning electron microscope (SEM) or a method of tracing a metallic element of a carboxylic acid salt by elemental analysis of the fiber surface.

The resin impregnated fiber reinforced composition used in the present invention may preferably contain a dye (II) absorbing light having a wavelength of 300 to 3000 nm. As the dye (II), known dyes can be used without limitation.

For example, carbon-based dyes are preferable, and carbon black is more preferable.

The amount of the dye (II) in the resin impregnated fiber reinforced composition is preferably 0.01 to 5% by mass. The lower limit is preferably 0.1% by mass, more preferably 0.2% by mass. The upper limit is preferably 3% by mass, more preferably 2% by mass.

As a molding method using a reinforcing fiber bundle, for example, there is a method in which after aligning the opened reinforcing fiber bundles, they are brought into contact with the melted matrix resin to obtain a resin impregnated fiber reinforced molded article (unidirectional material) in which the fibers are oriented unidirectionally. The unidirectional material can be used as it is, or it can be formed into a laminate by laminating a plurality of them and integrating them. Further, it can be appropriately cut into a tape shape. The unidirectional material may be provided with a notch as described in JP S63-247012.

A first embodiment (laminate) of the present invention has a plurality of unit layers each having the following layers (α-1) to (ε-1) as one unit layer. Each layer is a resin impregnated fiber reinforced composition layer in which fibers are oriented unidirectionally. Further, it is characterized in that the angles of the orientation axes of the layers (α-1) to (ε-1) satisfy the following relationship.

(α-1) layer: 0° (assumed as reference axis)
(β-1) layer: 28° to 42°
(γ-1) layer: 83° to 97°
(δ-1) layer: -28° to -42°
(ε-1) layer: -2° to 2°

The preferred angular range of each layer is as follows.

(α-1) layer: 0° (assumed as reference axis)
(β-1) layer: 30° to 40°
(γ-1) layer: 85° to 95°
(δ-1) layer: -30° to -40°
(ε-1) layer: -2° to 2°.

In the first embodiment, the difference between the absolute values of the angles of the layer (β-1) and the layer (δ-1) is preferably 8° or less, more preferably 5° or less, particularly preferably 3° or less.

The first embodiment has a layer constitution having substantially symmetric planes with the above-described layers (α-1) to (ε-1) as one unit. For example, if the layers corresponding to the above layers (α-1) to (ε-1) are layers (α'-1) to (ε'-1) as described below:

(α'-1) layer: 0° (assumed as reference axis)
(β'-1) layer: 28° to 42°
(γ'-1) layer: 83° to 97°
(δ'-1) layer: -28° to -42°
(ε'-1) layer: -2° to 2°
a constitution composed of (α-1)/(β-1)/(γ-1)/(δ-1)/(ε-1)/(ε'-1)/(δ'-1)/(γ'-1)/(β'-1)/(α'-1) can be exemplified. What is important here is the presence of the layer (ε-1) (and layer (ε'-1)) in the above case. In the absence of this layer, the result that the effect of the present invention cannot be obtained is obtained. Preferably, it is preferable that the thicknesses of the corresponding layers are also substantially similar. The corresponding layers are, for example, the layer (α-1) and the layer (α'-1), the layer (β-1) and the layer (β'-1), the layer (γ-1) and the layer (γ'-1), the layer (δ-1) and the layer (5'-1), and, the layer (ε-1) and the layer (ε'-1).

As long as it has the laminated structure having the layer constitution of the first embodiment, there is a feature that the shape of the press surface before pressing and the shape after pressing are basically similar even if melt press molding is performed. That is, it has extremely superior feature from the viewpoint of controlling the molded shape. Specifically, it means that the molded shape can be easily controlled without using a metal mold. Such a feature would have caused an unexpected effect that the flow directions of the matrix resin components of the respective layers influence each other, so that the anisotropy of spread at the time of pressing does not occur, since the fibers of respective layers are oriented at the above-described angles.

Further, since it is expected that the fluidity of the resin will be a natural flow by not using a metal mold, it is expected that unnecessary strain will not occur in the molding process. By this, it is expected that the laminate having the resultant layer constitution is excellent in balance between mechanical properties such as strength and surface properties.

Since the laminate of the first embodiment has such a feature, various molding methods including a so-called press molding process such as stamping molding and melt rolling molding, in addition to the above press molding method, can be suitably performed on the laminate.

Examples of the molding conducted by using the pressing step include hot press, vacuum press using e.g., an autoclave, and continuous press using a double belt and a pressure roll. The molding temperature at the pressing step is preferably at a temperature 20°C or more higher than the melting point or glass-transition temperature of the matrix resin of the resin impregnated fiber reinforced composition layer. More preferably, it is a temperature 20 to 50°C higher than the melting point or glass transition temperature of the matrix resin. The pressure at the time of pressing is generally 0.1 to 10 MPa.

The laminate of the first embodiment basically spreads both in the MD direction and in the TD direction before and after the pressing step described above. The MD direction is the orientation direction of the fiber of the layer ($\alpha$-1). The characteristic of the first embodiment is that the ratio (MD/TD) of the rate of change in length in the MD direction to the rate of change in length in the TD direction before and after molding is a value in the vicinity of 1. Its ratio (MD/TD) is preferably 0.9 to 1.1. The lower limit thereof is preferably 0.91, more preferably 0.92, particularly preferably 0.93. On the other hand, the upper limit thereof is preferably 1.09, more preferably 1.08, particularly preferably 1.07.

It is also possible to form the laminate of the first embodiment into the desired shape, and then subject the molded article to surface decoration by applying paint, film, or sheet.

The laminate of the first embodiment is expected to be excellent in balance of shape, appearance and mechanical properties. Hence, in addition to various sheets and films, the laminate of the first embodiment can be applied to various molded articles using these sheets and films, and applications using the same. Specifically, various containers (for example, pressure vessels), exterior materials and interior materials can be exemplified. Preferred uses for which the exterior materials and the interior materials are used include constituent members of automobiles (two-wheeled vehicles, four-wheeled vehicles) and household electric appliances.

A second, preferred embodiment (tape winding pipe) of the present invention has a laminated structure which has, as the layer minimum constitution, three layers ($\alpha$-2) to ($\gamma$-2) from the inner surface of the pipe and three layers ($\delta$-2) to ($\zeta$-2) from the outer surface of the pipe being symmetrical to the inner surface, and which optionally has a plurality of layers of arbitrary angles therebetween. The layers ($\alpha$-2) to ($\zeta$-2) are each a resin impregnated fiber reinforced composition layer in which fibers are oriented unidirectionally. When the central axis of the pipe is taken as the reference axis, the angles of the orientation axes of the layers ($\alpha$-2) to ($\zeta$-2) with respect to the reference axis satisfy the following relationship.

($\alpha$-2) layer: 60° to 85°
($\beta$-2) layer: -85° to -60°
($\gamma$-2) layer: 0° to 40°
($\delta$-2) layer: -40° to 0°
($\epsilon$-2) layer: 60° to 85°
($\zeta$-2) layer: -85° to -60°

It is preferable that the angle of the layer ($\beta$-2) is the same as the angle of the layer ($\alpha$-2) in the absolute value, and the positive and negative are opposite to each other. It is preferable that the angle of the layer ($\delta$-2) is the same as the angle of the layer ($\gamma$-2) in the absolute value, and the positive and negative are opposite to each other. It is preferable that the angle of the layer ($\zeta$-2) is the same as the angle of the layer ($\epsilon$-2) in the absolute value, and the positive and negative are opposite to each other.

Here, the layer ($\alpha$-2) and the layer ($\beta$-2), and the layer ($\epsilon$-2) and the layer ($\zeta$-2) may partially intersect with each other by traverse winding. In the case of a pipe constituted of six layers, the layer ($\gamma$-2) and the layer ($\delta$-2) may partially intersect with each other by traverse winding. Traverse winding is a winding method in which a head winding a tape around a rotating mandrel moves from left to right and then moves from right to left at a constant speed and this operation is repeated to perform winding so as to fill the whole mandrel surface. When traverse winding is carried out, for example, a layer of + 80° and a layer of -80° alternately appear on the surface with a certain regularity.

The preferred angular range of each layer is as follows.

($\alpha$-2) layer: 70° to 80°
($\beta$-2) layer: -80° to -70°
($\gamma$-2) layer: 10° to 20°
($\delta$-2) layer: -20° to -10°
($\epsilon$-2) layer: 70° to 80°
($\zeta$-2) layer: -80° to -70°

**[0114]** , The second embodiment has, as the layer minimum constitution, three layers (α-2) to (γ-2) from the inner surface of the pipe and three layers (δ-2) to (ζ-2) from the outer surface of the pipe being symmetrical to the inner surface, and may have a plurality of layers of arbitrary angles therebetween. Layers (α-2)/(β-2)/(γ-2) and (δ-2)/(ε-2)/(ζ-2) are regarded to constitute the minimum layer constitution, and in the case of a 12-layer constitution, layers (φ-2)/(η-2)/(κ-2)/(λ-2)/(μ-2)/(π-2) are inserted between (α-2) to (γ-2) and (δ-2) to (ζ-2). Specifically, a 12-layer constitution of (α-2)/(β-2)/(γ-2)/(φ-2)/(η-2)/(κ-2)/(λ-2)/(μ-2)/(π-2)(δ-2)/(ε-2)/(ζ-2) is obtained. In the case of a 15-layer constitution in which the total number of layers is an odd number, for example, layers (φ-2)/(η-2)/(κ-2)/(λ-2)/(μ-2)/(π-2)/(ρ-2)/(Ψ-2)/(θ-2) are inserted between (α) to (γ) and (δ-2) to (ζ-2). Specifically, a 15-layer constitution of (α-2)/(β-2)/(γ-2)(φ-2)/(η-2)/(κ-2)/(λ-2)/(μ-2)/(π-2)/(ρ-2)/(Ψ-2)/(θ-2)(δ-2)/(ε-2)/(ζ-2) is obtained. The seventh to ninth layers (λ-2)/(μ-2)/(π-2) in 15 layers cannot be traversewound, hence, they are subjected to winding as a single layer. Though 6 layers, 12 layers and 15 layers have been exemplified, however, any number of layers can be provided as long as the number of layers is six or more in accordance with the desired pipe thickness.

With the laminated structure explained above, a tape winding pipe excellent in balance between bending rigidity and compressive rigidity can be obtained.

The tape winding pipe of the second embodiment is obtained, for example, as follows: the above-described resin impregnated fiber reinforced composition is processed into a tape shape by a known method, and the tape is fused while being brought into contact with the mandrel while melting the tape surface, by a tape winding method using a known laser fusing method together. As an example of the tape winding molding method, for example, a method in which a photocurable resin is used as a matrix resin is disclosed in JP 2005-206847 (for example, FIG. 8). For example, a method of molding using the above-described thermoplastic resin in an apparatus in which a laser irradiation section is attached as a light source to a robot arm as disclosed on September 8, 2016 at the homepage of AFPT (Germany) (http://www.afpt.de/welcome/) can be mentioned as an example. Additionally, apparatuses and methods disclosed in "Development of a hybrid tail rotor drive shaft by the use of thermoplastic Automated fiber placement" published in 17th-Europian conference on Composite Materials, 1 to 8 (2016) and "Selective reinforcement of steel with CF/PA6 composites in a laser tape placement process: effect of surface preparation and laser angle on interfacial bond strength " can be exemplified.

When laser fusion is performed, it is preferable that the light source and the mandrel are appropriately moved and melting and fusion are conducted efficiently. When adopting such a method, the moving speed thereof is preferably 10 to 100 m/min, more preferably 30 to 90 m/min in terms of the scanning speed of the fiber-reinforced thermoplastic resin composition tape.

The wavelength of the laser is preferably 300 to 3000 nm. This wavelength preferably includes the absorption wavelength region of the reinforcing fiber (C) or the dye (II) described above. The output of the laser is preferably 50 W to 5 kW. If this output is too strong, it may cause deterioration or deformation of the resin. On the other hand, if it is too weak, melting of the resin may not occur.

EXAMPLES

Hereinafter, the present invention will be specifically described with reference to examples, but the present invention is not limited to these examples at all.

(1) Measurement of adhesion amount of propylene-based resin to reinforcing fiber bundle

About 5 g of a reinforcing fiber bundle to which a propylene-based resin was attached was taken and dried at 120°C for 3 hours, and its weight $W_1$ (g) was measured. Next, the reinforcing fiber bundle was heated in a nitrogen atmosphere at 450°C for 15 minutes, then cooled to room temperature, and its weight $W_2$ (g) was measured. The adhesion amount was calculated by the following equation using $W_1$ (g) and $W_2$ (g).

$$\text{Adhesion amount} = [(W_1 - W_2)/W_2] \times 100 \ (\% \text{ by mass})$$

(2) Measurement of weight-average molecular weight of propylene-based resin

The molecular weight was determined by a GPC method under the following conditions.

Liquid Chromatograph: PL-GPC 220 type High Temperature Gel Permeation Chromatograph (built-in differential refractometer apparatus) manufactured by Polymer Laboratories, Inc.
Column: TSKgel $GMH_{HR}$-H(S)-HT $\times$ 2 and $GMH_{HR}$-H(S) $\times$ 1 manufactured by Tosoh Corporation were connected in series.

Mobile phase medium: 1,2,4-trichlorobenzene (containing 0.025% stabilizer)
Flow rate: 1.0 ml/min
Measurement temperature: 150°C
Method for preparing calibration curve: A standard polystyrene sample was used.
Sample concentration: 0.15% (w/v)
Amount of sample solution: 500 μl
Standard sample for preparing calibration curve: monodispersed polystyrene manufactured by Tosoh Corporation
Molecular weight calibration method: Standard calibration method (polystyrene conversion)

(3) Structure analysis of propylene-based resin

For each of the first and second propylene-based resins, organic compound element analysis, inductively coupled plasma (ICP) emission analysis, IR (infrared absorption) spectrum analysis, $^1$H-NMR measurement and $^{13}$C-NMR measurement were carried out, and the content ratio of the monomer structure was evaluated from the amount of elements contained in the propylene-based resin, the identification of structure of the functional group, each attributed proton and the peak intensity of carbon.

The organic compound element analysis was carried out using an organic element analyzer 2400 II (manufactured by PerkinElmer). ICP emission analysis was carried out using ICPS-7510 (manufactured by Shimadzu Corporation). IR spectrum analysis was carried out using IR-Prestige-21 (manufactured by Shimadzu Corporation). $^1$H-NMR measurement and $^{13}$C NMR measurement were carried out using JEOL JNM-GX 400 Spectrometer (manufactured by JEOL Ltd.).

(4) Measurement of content of carboxylic acid salt of propylene-based resin

The content of a carboxylic acid salt and the content of a carboxylic acid not neutralized were measured by carrying out the following operations on each of the first and second propylene-based resins.

0.5 g of a propylene-based resin was refluxed with heat in 200 ml of toluene and dissolved. This solution was titrated with a 0.1 N potassium hydroxide-ethanol standard solution, and the acid value was calculated from the following formula. Phenolphthalein was used as an indicator.

$$\text{Acid value} = (5.611 \times A \times F)/B \text{ (mg-KOH/g)}$$

A: use amount of 0.1 N potassium hydroxide-ethanol standard solution (ml)
F: factor of 0.1 N potassium hydroxide-ethanol standard solution (1.02)
B: sample collection amount (0.50 g)

The acid value calculated above was converted into the number of moles of a carboxylic acid group not neutralized using the following formula.

$$\text{Number of moles of carboxylic acid group not neutralized} = \text{acid value} \times 1000/56 \text{ (mol/g)}$$

The conversion rate of the carboxylic acid group to the neutralized salt was calculated by the following formula using the total number of moles (mol/g) of carboxylic acid groups calculated separately by quantitative determination of carbonyl carbon of the carboxylic acid group by IR, NMR and elemental analysis.

$$\text{Conversion rate\%} = (1 - r) \times 100 \text{ (\%)}$$

r: number of moles of carboxylic acid group not neutralized/total number of moles of carboxylic acid group

(5) Measurement of number of fuzz caused by friction

It was determined in a manner similar to the method described in the examples of Japanese Patent No. 5584977.

The number of fuzz caused by friction of 0 to 5 pieces/m was accepted, and if exceeded, it was rejected.

(6) Measurement method of melting point

The melting point (Tm) of the polymer in the present invention was measured by a differential scanning calorimeter (DSC) on a DSC 220C apparatus manufactured by Seiko Instruments Inc. Samples (7-12 mg) were sealed in an aluminum pan and heated from room temperature to 200°C at 10°C/min. The sample was held at 200°C for 5 minutes to completely melt all crystals and then cooled to -50°C at 10°C/min. After 5 minutes at -50°C, the sample was heated a second time up to 200°C at 10°C/min. The peak temperature in this second heating test was adopted as the melting point (Tm-II).

<Reinforcing fiber (C)>

A carbon fiber bundle (trade name: Pyrofil TR 50S 12L, number of filaments: 12000, strand strength: 5000 MPa, strand elastic modulus: 242 GPa, manufactured by Mitsubishi Rayon Co., Ltd.) was immersed in acetone and subjected to ultrasonic wave for 10 minutes, then, the carbon fiber bundle was pulled up, washed three more times with acetone, and dried at room temperature for 8 hours to remove the adhering sizing agent and the resultant carbon fiber bundle was used.

(Production Example 1 - Production of emulsion)

100 parts by mass of a propylene-butene-ethylene copolymer having a weight average molecular weight of 120,000 as measured by GPC and having no melting point as a propylene-based resin (A), 10 parts by mass of a maleic anhydride-modified propylene-based polymer (weight-average molecular weight Mw = 27,000, acid value: 45 mg-KOH/g, maleic anhydride content: 4% by mass, melting point: 140°C) as a raw material of a propylene-based resin (B) and 3 parts by mass of potassium oleate as a surfactant (C) were mixed. This mixture was supplied from a hopper of a twin-screw extruder (PCM-30, LID = 40, manufactured by Ikegai Ironworks Corp.) at a rate of 3000 g/hour, and from the feed port provided in the vent portion of the extruder, a 20% aqueous solution of potassium hydroxide was continuously fed at a rate of 90 g/hr, and the mixture was continuously extruded at a heating temperature of 210°C. The extruded resin mixture was cooled down to 110°C with a jacketed static mixer set at the extruder mouth and then poured into warm water at 80°C to obtain an emulsion. The obtained emulsion had a solid content concentration of 45%.

The above-mentioned maleic anhydride-modified propylene-based resin was obtained by mixing 96 parts by mass of a propylene-butene copolymer, 4 parts by mass of maleic anhydride and 0.4 parts by mass of Perhexa (registered trademark) 25B (manufactured by NOF CORPORATION) as a polymerization initiator, and modifying at a heating temperature of 160°C for 2 hours.

(Production of reinforcing fiber bundle)

The emulsion produced in Production Example 1 was adhered to reinforcing fiber manufactured by Mitsubishi Rayon Co., Ltd. using a roller impregnation method. Subsequently, the product was dried on-line at 130°C for 2 minutes to remove low-boiling point components to obtain a reinforced fiber bundle. The adhesion amount of the emulsion was 0.87%. The fuzzing resistance of the reinforcing fiber bundle was acceptable.

<Examples A1 to A3 and Reference Example A1 >

(Production of resin impregnated fiber reinforced sheet)

A resin composition containing 57 parts of a reinforcing fiber (C) and 43 parts of a commercially available unmodified propylene resin (trade name: Prime Polypro J106MG, manufactured by Prime Polymer Co., Ltd., melting point 160°C) and a modified polypropylene (melt flow rate measured at 190°C under a load of 2.16 kg according to ASTM D 1238 is 9.1 g/10 min, melting point: 155°C) grafted with 0.5% by mass of maleic anhydride as a propylene-based resin (D) was prepared, and a resin impregnated fiber reinforced sheet (hereinafter also referred to as a unidirectional sheet) having a thickness of 120 $\mu$m to 130 $\mu$m in which fibers were oriented unidirectionally was prepared by a conventional method. Specifically, a unidirectional sheet was produced by an apparatus in which an extruder for melting a resin was combined with the apparatus described in JP 2013-227695. More specifically, a reinforcing fiber bundle was opened by a spreading device described in JP 2013-227695, the heated reinforcing fiber bundle and a propylene-based resin (D) melted by an extruder were formed into films by T-die, sandwiched between release papers and heated and pressurized with a pressure roller to impregnate the propylene-based resin (D) into the reinforcing fiber bundle, followed by cooling and solidification to obtain a unidirectional sheet. The temperature of the extruder and the T die was 250°C, and the temperature of the pressure roll was 275°C. In one example of the obtained unidirectional sheet, the thickness

was 130 μm and the fiber volume fraction Vf was 0.4. The weight ratio of J106 MG to modified polypropylene was 90/10 (weight-average molecular weight was equivalent to 300,000) (the melting point of the resin was 160°C).

(Production of laminate)

The above unidirectional sheet was laminated at the angle shown in Table 1 and this was placed in a mold made of a Teflon (registered trademark) sheet using a double belt press machine (manufactured by Sandvik Corporation, owned by Innovation Composite Materials Research and Development Center, Kanazawa Institute of Technology, heating zone press length 2000 mm, cooling zone press length 750 mm, preliminary zone press length 1000 mm, pressurized medium indirect cooling method). The apparatus was operated at a temperature of the heating zone of 210°C, a cooling water temperature of the cooling zone of 25°C, a pressurized medium pressure of 5 MPa and a belt speed of 0.5 m/min to obtain laminates of Examples A1 to A3 (each 10-layer constitution) and Reference example A1 (8-layer constitution). The mold of the Teflon (registered trademark) sheet having a thickness of 1 mm in the case of the 8-layer laminate and a thickness of 1.3 mm in the case of the 10-layer laminate, hollowed out in the same size as the size of the unidirectional sheet laminated, was used. The thickness of the laminate was 1 to 1.4 mm. The obtained laminate was cut out to prepare a test piece (110 mm × 110 mm).

(Production of press sheet)

A pressing apparatus equipped with a flat sheet metal mold (manufactured by Shinto Metal Industries, Ltd., apparatus name: NSF-37HHC) was heated to 190°C, the above-described laminate was sandwiched between flat sheet metal molds and preheated for 3 minutes, then, pressed at a hydraulic pressure of 8 MPa and held for 2.5 minutes, then immediately cooled in the pressurized state and held for 10 minutes to obtain a pressed sheet. The flat sheet metal mold used at this time had a half height of the laminate as a raw material, and its opening was 200 × 180 mm, thus, having a sufficient size as compared with the laminate.

Dimensions before and after molding of the obtained pressed sheet, the MD/TD ratio (here, the direction of the fiber of the layer (α-1) is defined as the MD direction), thicknesses of the laminate before and after molding, the thickness ratio (thickness before molding/thickness after molding) and the area ratio (area after molding/area before molding) were determined. The results are shown in Table 2.

Table 1

| | Angle of orientation | | | | | | | | | |
|---|---|---|---|---|---|---|---|---|---|---|
| | α-1 | β-1 | γ-1 | δ-1 | ε-1 | ε'-1 | δ'-1 | γ'-1 | β'-1 | α'-1 |
| Ex. A1 | 0 | 40 | 90 | -40 | 0 | 0 | -40 | 90 | 40 | 0 |
| Ex. A2 | 0 | 35 | 90 | -35 | 0 | 0 | -35 | 90 | 35 | 0 |
| Ex. A3 | 0 | 30 | 90 | -30 | 0 | 0 | -30 | 90 | 30 | 0 |
| Ref. Ex. A1 | 0 | 45 | 90 | -45 | - | - | -45 | 90 | 45 | 0 |

Table 2

| | Dimension before molding | | Dimension after molding | | MD/TD | Thickness of laminate | | Area ratio (after molding /before molding) | Thickness ratio (before molding /after molding) |
|---|---|---|---|---|---|---|---|---|---|
| | MD | TD | MD | TD | | before molding | after molding | | |
| | (mm) | (mm) | (mm) | (mm) | | (mm) | (mm) | | |
| Ex. A1 | 110 | 110 | 160 | 170 | 0.94 | 1.335 | 0.95 | 2.25 | 1.41 |
| Ex. A2 | 110 | 110 | 170 | 170 | 1 | 1.26 | 0.68 | 2.39 | 1.85 |
| Ex. A3 | 110 | 110 | 165 | 170 | 0.97 | 1.3 | 0.64 | 2.32 | 2.03 |

(continued)

|  | Dimension before molding | | Dimension after molding | | M D/TD | Thickness of laminate | | Area ratio (after molding /before molding) | Thickness ratio (before molding /after molding) |
|---|---|---|---|---|---|---|---|---|---|
|  | MD | TD | MD | TD |  | before molding | after molding |  |  |
|  | (mm) | (mm) | (mm) | (mm) |  | (mm) | (mm) |  |  |
| Ref. Ex. A1 | 110 | 110 | 150 | 170 | 0.88 | 1.05 | 0.51 | 2.1 | 2.06 |
| MD: length in direction of fiber in $\alpha$-1 layer<br>TD: length in direction vertical to fiber in $\alpha$-1 layer | | | | | | | | | |

As is apparent from the results shown in Table 2, the laminates of Examples A1 to A3 uniformly spread in an arbitrary direction during melt press molding, since the laminates had a laminated structure of a plurality of units each having layers ($\alpha$-1) to ($\varepsilon$-1) as one unit, wherein the laminated structure has symmetric planes.

<Example B 1, which is not according to the present invention, and Reference Examples B 1 to B 3>

A resin composition containing 57 parts of a reinforcing fiber (C) and 43 parts of a commercially available unmodified propylene resin (trade name: Prime Polypro J106MG, manufactured by Prime Polymer Co., Ltd., melting point 160°C), a modified polypropylene (melt flow rate measured at 190°C under a load of 2.16 kg according to ASTM D 1238 is 9.1 g/10 min, melting point: 155°C) grafted with 0.5% by mass of maleic anhydride and a master batch containing carbon black (PEONY (registered trademark) BLACK BMB-16117 manufactured by DIC Corporation, carbon black content 40%) as a propylene-based resin (D) was prepared, and a resin impregnated fiber reinforced sheet (hereinafter, also referred to as a unidirectional sheet) having an average thickness of 150 $\mu$m in which fibers were oriented unidirectionally was fabricated by a conventional method. The weight ratio of the J106MG to the modified polypropylene was 85/15 (weight-average molecular weight was equivalent to 320,000), and the content was adjusted so that the content of carbon black was 1% by mass of the whole resin composition. (The resin melting point: 160°C, the maleic anhydride content relative to the entire resin composition: 0.034% by mass, the fiber volume fraction Vf: 0.4).
Using a robot equipped with a "STWH INB" type winding head manufactured by AFPT GmbH which controls diode laser having an output of 3 kW and a wavelength of 960 to 1070 nm by closed-loop, the above-described unidirectional sheet was cut into a 12 mm wide tape by a slitter, the tape was wound around a mandrel having an inner diameter of 24 mm, to form a pipe. Winding molding was carried out by traverse winding so that the total number of layers became 6 at the angle shown in Table 3, to obtain a tape winding pipe.

Table 3 (Constituted of 6 layers)

|  | Angle of orientation | | | | | |
|---|---|---|---|---|---|---|
|  | $\alpha$-2 | $\beta$-2 | $\gamma$-2 | $\delta$-2 | $\varepsilon$-2 | $\zeta$-2 |
| Ex. B1 | 81 | -81 | 17 | -17 | 74 | -74 |
| Ref. Ex. B1 | 45 | -45 | 0 | 0 | 0 | 0 |
| Ref Ex. B2 | 47 | -47 | 33 | -33 | 9 | -9 |
| Ref. Ex. B3 | 46 | -46 | 47 | -47 | 48 | -48 |

<Examples B2, B3, which are not according to the present invention, and Reference Example B4>

A tape with a width of 12 mm produced by the same method as in Example B1 was wound by traverse winding so that the total number of layers became 12 at the angle shown in Table 4, to obtain a tape winding pipe.

Table 4 (Constituted of 12 layers)

| | Angle of orientation | | | | | | | | | | | |
|---|---|---|---|---|---|---|---|---|---|---|---|---|
| | $\alpha$-2 | $\beta$-2 | $\gamma$-2 | $\varphi$-2 | $\eta$-2 | $\kappa$-2 | $\lambda$-2 | $\mu$-2 | $\pi$-2 | $\delta$-2 | $\varepsilon$-2 | $\zeta$-2 |
| Ex. B2 | 80 | -70 | 10 | -10 | 10 | -10 | 10 | -10 | 10 | -10 | 70 | -80 |
| Ex. B3 | 80 | -70 | 10 | -10 | 45 | -45 | 45 | -45 | 10 | -10 | 70 | -80 |
| Ref. Ex. B4 | 10 | -10 | 10 | -10 | 10 | -10 | 10 | -10 | 10 | -10 | 10 | -10 |

<Examples B4, B5, which are not according to the present invention, and Reference Example B5>

A tape with a width of 12 mm produced by the same method as in Example B1 was wound so that the total number of layers became 15 at the angle shown in Table 5. Since the seventh to ninth layers ($\lambda$-2 to $\pi$-2) in 15 layers cannot be traverse-wound, they were subjected to winding as a single layer, and the first to sixth layers ($\alpha$-2~$\kappa$-2) and the tenth to fifteenth layers ($\rho$-2~$\zeta$-2) were wound by traverse winding, to obtain tape winding pipes.

Table 5 (Constituted of 15 layers)

| | Angle of orientation | | | | | | | | | | | | | | |
|---|---|---|---|---|---|---|---|---|---|---|---|---|---|---|---|
| | $\alpha$-2 | $\beta$-2 | $\gamma$-2 | $\varphi$-2 | $\eta$-2 | $\kappa$-2 | $\lambda$-2 | $\mu$-2 | $\pi$-2 | $\rho$-2 | $\Psi$-2 | $\theta$-2 | $\delta$-2 | $\varepsilon$-2 | $\zeta$-2 |
| Ex. B4 | 80 | -80 | 10 | -10 | 10 | -10 | 10 | 0 | -10 | 10 | -10 | 10 | -10 | 80 | -80 |
| Ex. B5 | 80 | -80 | 10 | -10 | 10 | -10 | 80 | 0 | -80 | 10 | -10 | 10 | -10 | 80 | -80 |
| Ref. Ex.B5 | 10 | 10 | 10 | 10 | 10 | 10 | 10 | 0 | -10 | -10 | -10 | -10 | -10 | -10 | -10 |

The tests of 4-point bending, 3-point bending and sectional compression of each of the above-mentioned tape winding pipes were carried out under the following conditions to measure bending rigidity and compressive rigidity. The results are shown in Tables 6 to 8.

<Rigidity in 4-point bending>

The tape winding pipe was cut to a length of 150 mm and used as a test piece. Shimadzu Autograph AG-5 KNX manufactured by Shimadzu Corporation was used as the test apparatus. As a 4-point bending jig, a jig in which the curvature of the tip of the indenter was 5 mm, the lower indenter was located 15 mm from the end face of the test piece, the span of the two points was 120 mm, the indenter on the upper side was 45 mm from the end face of the test piece, and the span between the two points was adjusted to 60 mm was used. The test piece (pipe) was placed in the center of the 4-point bending jig, the load at the time of pushing in 2 mm at a pushing speed of 1 mm/min with the position at which the upper and lower indenters contacted the test piece was set to zero was measured, and the value obtained by dividing this load by the pushed displacement (2 mm) was taken as the rigidity (N/mm) in 4-point bending.

<Rigidity in 3-point bending>

The same test piece and test equipment as the 4-point bending test were used. As a 3-point bending jig, a jig in which the curvature of the tip of the indenter was 5 mm, the lower indenter was located 15 mm from the end face of the test piece, the span of the two points was 120 mm, and the upper indenter was located 75 mm from the end face of the test piece was used. The test piece (pipe) was placed in the center of the 3-point bending jig, the load at the time of pushing in 2 mm at a pushing speed of 1 mm/min with the position at which the upper and lower indenters contacted the test piece was set to zero was measured, and the value obtained by dividing this load by the pushed displacement (2 mm) was taken as the rigidity (N/mm) in 3-point bending.

<Rigidity in sectional compression>

The tape winding pipe was cut to a length of 6 mm and used as a test piece. As the testing apparatus, the same test apparatus as the 4-point bending test was used. A flat jig was attached to the test apparatus, and the test piece (pipe) was placed between the upper and lower flat plates. The load at the time of pushing in 2 mm at a pushing speed of 1 mm/min with the position at which the upper and lower flat plates contacted the test piece was set to zero was measured, and the value obtained by dividing this load by the pushed displacement (2 mm) and further by the length of the test piece (6 mm) was taken as the rigidity (N/mm) in sectional compression.

Table 6 (Constituted of 6 layers)

|  | Rigidity in 4-point bending (N/mm) | Rigidity in 3-point bending (N/mm) | Rigidity in sectional compression (N/mm) |
|---|---|---|---|
| Ex. B1 | 865.4 | 574.5 | 16.8 |
| Ref. Ex. B1 | 139.3 | 108.8 | 0.9 |
| Ref. Ex. B2 | 194.9 | 162.5 | 1.7 |
| Ref. Ex. B3 | 469.1 | 343.3 | 3.8 |

Table 7 (Constituted of 12 layers)

|  | Rigidity in 4-point bending (N/mm) | Rigidity in 3-point bending (N/mm) | Rigidity in sectional compression (N/mm) |
|---|---|---|---|
| Ex. B2 | 4081 | 2573 | 91.1 |
| Ex. B3 | 4206 | 2687 | 92.6 |
| Ref. Ex. B4 | 524.9 | 463.4 | 4.7 |

Table 8 (Constituted of 15 layers)

|  | Rigidity in 4-point bending (N/mm) | Rigidity in 3-point bending (N/mm) | Rigidity in sectional compression (N/mm) |
|---|---|---|---|
| Ex. B4 | 6326 | 3870 | 158.8 |
| Ex. B5 | 6304 | 3839 | 161.1 |
| Ref. Ex. B5 | 989.0 | 767.0 | 8.7 |

As is apparent from the results shown in Tables 6 to 8, the pipes of Examples B1 to B5 were excellent in balance between bending rigidity and compressive rigidity. On the other hand, the pipes of Reference Examples B1 to B5 were inferior in one of bending rigidity (4-point bending, 3-point bending) and compressive rigidity and inferior in balance. It should be noted that the tape winding pipe shown in Example B need not be a pipe having a circular cross section. It can also be processed by heating and compressing it into streamline, half-moon shape or other irregular cross section. Also, by performing tape winding on a mandrel having an irregular cross-sectional shape in advance, it is possible to obtain a pipe having an irregular cross section.

Industrial Applicability

Since the laminate of the present invention has a substantially similar shape before and after melt press molding, it can be formed into a desired shape even without control by a mold. In addition, since the disorder of the structure at the time of molding is small, the strength is excellent. Therefore, in addition to various sheets and films, the present laminate can be applied to various molded articles and applications using these sheets and films. Specifically, examples thereof include various containers (for example, pressure vessels), exterior materials and interior materials of automobiles (two-wheeled vehicles, four-wheeled vehicles) and household electrical appliances.

Since the tape winding pipe of the present invention is excellent in balance between bending rigidity and compressive rigidity, it is particularly suitable for automobile parts, bicycle parts, electric/electronic parts, home and office electrical product parts.

Explanation of numeral

1: pipe

**Claims**

1.   A laminate having a laminated structure of five or more layers

wherein each layer is a resin impregnated fiber reinforced composition layer in which fibers are oriented unidirectionally, and the resin in the resin impregnated fiber reinforced composition layer is a polymer having the melting point or the glass-transition temperature, as determined by the method indicated below, of 50 to 300°C, and.
the laminate has a laminated structure with a plurality of unit layers each having five layers ($\alpha$-1) to ($\varepsilon$-1) as one unit layer that satisfy the following requirements (A-i) and (A-ii), wherein the laminated structure has symmetric planes as a layer:
Requirement (A-i): the layers ($\alpha$-1) to ($\varepsilon$-1) are each a resin impregnated fiber reinforced composition layers in which fibers are oriented unidirectionally:
Requirement (A-ii): the angles of the orientation axes of the layers ($\alpha$-1) to ($\varepsilon$-1) satisfy the following relationship:

($\alpha$-1) layer: 0° (assumed as reference axis)
(P-1) layer: 28° to 42°
($\gamma$-1) layer: 83° to 97°
($\delta$-1) layer: -28° to -42°
($\varepsilon$-1) layer: -2° to 2°.

Measurement method of melting point or glass transition temperature:
The melting point or the glass-transition temperature of the polymer is measured by a differential scanning calorimeter (DSC) according to the following procedure:

1. A sample (7-12 mg) is sealed in an aluminum pan and heated from room temperature to 200°C at 10°C/min.
2. The sample is held at 200°C for 5 minutes to completely melt all crystals and then cooled to -50°C at 10°C/min.
3. After 5 minutes at -50°C, the sample is heated a second time up to 200°C at 10°C/min.
4. The peak temperature in this second heating test is adopted as a melting point, and the shift point due to the glass transition is adopted as a glass-transition temperature.

2.   The laminate according to Claim 1, wherein the angles of the orientation axes of the layers ($\alpha$-1) to ($\varepsilon$-1) satisfy the following relationship:

($\alpha$-1) layer: 0° (assumed as reference axis)
(P-1) layer: 30° to 40°
($\gamma$-1) layer: 85° to 95°
($\delta$-1) layer: -30° to -40°
($\varepsilon$-1) layer: -2° to 2°.

3.   The laminate according to Claim 1, wherein the difference between the absolute values of the angles of the layer (P-1) and the layer ($\delta$-1) is 8° or less.

4.   The laminate according to Claim 1, wherein the fiber in the resin impregnated fiber reinforced composition layer is a carbon fiber.

5.   The laminate according to Claim 1, wherein the resin in the resin impregnated fiber reinforced composition layer is a propylene-based polymer.

6.   The laminate according to Claim 1, wherein the laminate is a press sheet.

**Patentansprüche**

1. Laminat mit einer laminierten Struktur von fünf oder mehr Schichten, wobei jede Schicht eine harzimprägnierte faserverstärkte Zusammensetzungsschicht ist, in der Fasern unidirektional orientiert sind, und das Harz in der harzimprägnierten faserverstärkten Zusammensetzungsschicht ein Polymer mit einem Schmelzpunkt oder einer Glasübergangstemperatur, bestimmt durch das unten angegebene Verfahren, von 50 bis 300°C ist, und

   das Laminat eine laminierte Struktur mit einer Mehrzahl von Einheitsschichten mit jeweils fünf Schichten ($\alpha$-1) bis ($\epsilon$-1) als eine Einheitsschicht aufweist, die die folgenden Anforderungen (A-i) und (A-ii) erfüllt, wobei die laminierte Struktur symmetrische Ebenen als eine Schicht aufweist:
   Anforderung (A-i): Die Schichten ($\alpha$-1) bis ($\epsilon$-1) sind jeweils eine harzimprägnierte faserverstärkte Zusammensetzungsschicht, in der die Fasern unidirektional orientiert sind:
   Anforderung (A-ii): Die Winkel der Orientierungsachsen der Schichten ($\alpha$-1) bis ($\epsilon$-1) erfüllen die folgende Beziehung:

   ($\alpha$-1)-Schicht: 0° (als Bezugsachse angenommen)
   ($\beta$-1)-Schicht: 28° bis 42°
   ($\gamma$-1)-Schicht: 83° bis 97°
   ($\delta$-1)-Schicht: -28° bis -42°
   ($\epsilon$-1)-Schicht: -2° bis 2°.

   Messverfahren für den Schmelzpunkt oder die Glasübergangstemperatur:
   Der Schmelzpunkt oder die Glasübergangstemperatur des Polymers wird mit einem Dynamische Differenz-Kalorimeter (DSC) gemäß dem folgenden Verfahren gemessen:

   1. Eine Probe (7-12 mg) wird in einer Aluminiumschale versiegelt und bei 10°C/min von Raumtemperatur auf 200°C erhitzt.
   2. Die Probe wird 5 Minuten lang bei 200°C gehalten, um alle Kristalle vollständig zu schmelzen, und dann bei 10°C/min auf -50°C abgekühlt.
   3. Nach 5 Minuten bei -50°C wird die Probe ein zweites Mal bei 10°C/min auf 200°C erhitzt.
   4. Die Peak-Temperatur bei diesem zweiten Erhitzungstest wird als Schmelzpunkt angenommen und der Verschiebungspunkt aufgrund des Glasübergangs wird als Glasübergangstemperatur angenommen.

2. Laminat gemäß Anspruch 1, wobei die Winkel der Orientierungsachsen der Schichten ($\alpha$-1) bis ($\epsilon$-1) die folgende Beziehung erfüllen:

   ($\alpha$-1)-Schicht: 0° (als Bezugsachse angenommen)
   ($\beta$-1)-Schicht: 30° bis 40°
   ($\gamma$-1)-Schicht: 85° bis 95°
   ($\delta$-1)-Schicht: -30° bis -40°
   ($\epsilon$-1)-Schicht: -2° bis 2°.

3. Laminat gemäß Anspruch 1, wobei die Differenz zwischen den Absolutwerten der Winkel der Schicht ($\beta$-1) und der Schicht ($\delta$-1) 8° oder weniger beträgt.

4. Laminat gemäß Anspruch 1, wobei die Faser in der harzimprägnierten faserverstärkten Zusammensetzungsschicht eine Kohlenstofffaser ist.

5. Laminat gemäß Anspruch 1, wobei das Harz in der harzimprägnierten faserverstärkten Zusammensetzungsschicht ein propylenbasiertes Polymer ist.

6. Laminat gemäß Anspruch 1, wobei das Laminat ein gepresstes Sheet ist.

**Revendications**

1. Stratifié présentant une structure stratifiée de cinq couches ou plus, dans lequel chaque couche est une couche de composition renforcée de fibres imprégnées de résine dans laquelle les fibres sont orientées dans une seule direction, et la résine dans la couche de composition renforcée de fibres imprégnées de résine est un polymère présentant le point de fusion ou la température de transition vitreuse, tel(le) que déterminé(e) par le procédé indiqué ci-dessous, de 50 à 300 °C, et

le stratifié présente une structure stratifiée avec une pluralité de couches unitaires présentant chacune cinq couches ($\alpha$-1) à ($\epsilon$-1) en tant que couche unitaire qui satisfont les exigences (A-i) et (A-ii) suivantes, dans lequel la structure stratifiée présente des plans symétriques en tant que couche :
exigence (A-i) : les couches ($\alpha$-1) à ($\epsilon$-1) sont chacune des couches de composition renforcées par des fibres imprégnées de résine dans lesquelles les fibres sont orientées dans une seule direction :
exigence (A-ii) : les angles des axes d'orientation des couches ($\alpha$-1) à ($\epsilon$-1) satisfont la relation suivante :

couche ($\alpha$-1) : 0° (considéré comme l'axe de référence)
couche ($\beta$-1) : 28° à 42°
couche ($\gamma$-1) : 83° à 97°
couche ($\delta$-1) : -28° à-42°
couche ($\epsilon$-1) : -2° à 2°.

Procédé de mesure de point de fusion ou de température de transition vitreuse : le point de fusion ou la température de transition vitreuse du polymère est mesuré(e) par un calorimètre à balayage différentiel (DSC) selon la procédure suivante :

1. un échantillon (7-12 mg) est scellé dans une nacelle en aluminium et chauffé de la température ambiante à 200 °C à 10 °C/min.
2. l'échantillon est maintenu à 200°C pendant 5 minutes pour faire fondre complètement tous les cristaux et puis refroidi à -50 °C à 10 °C/min.
3. au bout de 5 minutes à -50 °C, l'échantillon est chauffé une seconde fois jusqu'à 200 °C à 10 °C/min.
4. la température crête dans ce second essai de chauffage est adoptée comme point de fusion, et le point de changement dû à la transition vitreuse est adopté comme température de transition vitreuse.

2. Stratifié selon la revendication 1, dans lequel les angles des axes d'orientation des couches ($\alpha$ -1) à ($\epsilon$-1) satisfont la relation suivante :

couche ($\alpha$-1) : 0° (considéré comme l'axe de référence)
couche ($\beta$ -1) : 30° à 40°
couche ($\gamma$ -1) : 85° à 95°
couche ($\delta$ -1) : -30° à -40°
couche ($\epsilon$ -1) : -2° à 2°.

3. Stratifié selon la revendication 1, dans lequel la différence entre les valeurs absolues des angles de la couche ($\beta$-1) et de la couche ($\delta$ -1) est de 8° ou moins.

4. Stratifié selon la revendication 1, dans lequel la fibre dans la couche de composition renforcée de fibres imprégnées de résine est une fibre de carbone.

5. Stratifié selon la revendication 1, dans lequel la résine dans la couche de composition renforcée de fibres imprégnées de résine est un polymère à base de propylène.

6. Stratifié selon la revendication 1, dans lequel le stratifié est une feuille de presse.

Fig. 1

Bending

1

Compression

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1593491 A1
- EP 1541312 A1
- JP H091713 A
- JP 2013208725 A
- JP 2015505753 A
- WO 2004087775 A
- WO 2006057361 A
- WO 2006123759 A
- JP 2007308667 A
- WO 2005103141 A
- JP 4675629 B

- WO 2014050817 A
- JP 2013237861 A
- WO 2007125924 A
- WO 2008096682 A
- JP 2008144146 A
- JP 5584977 B
- JP 2015165055 A
- JP S63247012 B
- JP 2005206847 A
- JP 2013227695 A

**Non-patent literature cited in the description**

- Development of a hybrid tail rotor drive shaft by the use of thermoplastic Automated fiber placement. *17th-Europian conference on Composite Materials,* 2016, 1-8